# EUROPEAN PATENT APPLICATION

(11) **EP 0 907 072 A1**
(43) Date of publication of application: **07.04.1999**
(21) Application number: 97830481.4
(22) Date of filing: 30.09.1997
(51) Int. Cl.: G01L 5/10

(54) **Method for determining the load on rails and related apparatus**

(71) Applicant: Ferrovie Dello Stato S.p.A., 00100 Roma (IT); Raind S.r.l., 47030 Sogliano al Rubicone (FO) (IT)
(72) Inventor: Eboli, Italo, 00100 Roma (IT); Fondriest, Gianni, 47030 Sogliano Al Rubicone (FO) (IT)
(74) Representative: Lanzoni, Luciano

(57) **Abstract**

The present invention relates to a method for determining the load on rails and related apparatus and essentially its object is a set of measurement electronics provided with Wheatstone bridge sensors and processors with actuating means for compensations which are applied according to sequential criteria first longitudinally then transversely on the stem of the rail and subsequently also on the flange to conduct measurements verifying physical perturbations in order to compare them with known theoretical values taken as references and ascertain whether there are any deviations.

## Description

The present invention relates to a method for determining the load on rails and related apparatus and it essentially comprises a methodology to determine, through the use of instruments, in a direct and continuous manner, the longitudinal and/or flexural loads acting on the track, with the simultaneous measurement of the temperature The present invention is embodied practically in a system able to measure the loads present in each rail, in correspondence with the sections to which the apparatus is applied, allowing to perform the effective MONITORING of the track, in particular the one fitted with the long welded rail (*MONITORAGGIO ROTAIA SALDATA*. hence the Italian acronym MO.R.SA.).

As is well known, for the track fitted with long welded rails there is a need, both during its installation and during its operation, to determine the loads to which the rails are subjected in order to prevent and/or control situations that may be hazardous for railway traffic safety.

In the course of installation, the opportunity to measure directly and continuously the stresses to be imparted as a function of temperature would allow to control and certify the correctness of "adjustment" operations and to verify whether the no load condition is attained at the reference temperature. This verification assures containment within design limits of the traction or compression stresses imparted on the rail due to the coaction arising subsequently to temperature variations in the rail itself over time, thus preventing possible breakages due to traction or warping due to compression.

During operation, the rail undergoes additional (external) stresses due to rolling stock starting and breaking, deformation in artifacts, frictions, settling, etc. All such actions contribute to alter loading conditions, adding to (internal) heat-induced stresses.

The related measurements are particularly important on the life of the rail, in particular the railway rail, because the definition and measurement of stresses imparted on the rail, also as a function of its temperature, are essential as they allow to contain inevitable traction and/or compression phenomena on the track within design limits, thus preventing breakages due to traction or warping due to compression, both during installation and during operation, wherein the rail may be subjected, as stated previously, to external phenomena other than thermal ones, which add to the aforesaid internal stresses. In this regard, one may consider acceleration breaking by locomotives which always occur in the same section, expansion differences taking place when the rail is installed on a bridge-viaduct, as well as variations due to geological and structural settling by the support base to the rail itself. All such actions, and others besides, can alter the initial loading condition during installation and therefore must be suitably taken into account beforehand, generating traction or compression phenomena which, added to heat-induced stresses, can make the rail reach its designed safety limits and can even make it exceed them, with the resulting breakages or warping.

Currently these issues are confronted by responsible personnel through the occasional manual measurement of temperature, to which is correlated the (indirect) determination only of the stress due to thermal coaction, as nothing can be measured or estimated with regard to stresses due to the external actions stated above, with the deriving uncertainty about the actual stress status of the track. It must also be stated that such checks can only be limited to those sections of track deemed to be most at risk and to times of maximum heat excursion.

In summary, all actions undertaken so far can alleviate the burden of the problems connected with monitoring longitudinal loads on the rails, but they cannot assure levels of warranty and maintenance over time for their operation.

The main object of the present invention is essentially to solve the drawbacks described above, making available a method and related apparatus for determining the load on rails , both during the installation and the operation phase.

The purpose of the present invention therefore is to perfect an instrument for the direct and continuous measurement of the set of forces acting on the track, instrument which is thus able to allow to obtain a permanent and automatic system for monitoring whole sections of railway line and thus suited definitively to solve the problems described above, which directly involve railway safety.

This purpose and others besides, which shall be made clearer in the course of the description that follows, are reached by a method and related apparatus for determining the load on rails according to the description provided in the first claim, as well as in the subsequent ones.

Additional characteristics and advantages shall be made clearer in the detailed description of a preferred, but not exclusive, embodiment of a method and related apparatus for determining the load on rails according to the present invention. Such description shall be made hereafter with reference to the drawings, provided purely by way of non limiting indication, in which:
- Figure 1 shows a schematic representation of a rail with its component parts highlighted:
- Figure 2 shows a representation of the profile of a measurement signal as a function of thermal drifts in the zero condition:
- Figure 3 shows an additional graphic representation of the signal as a function of thermal drifts referred to the end of scale value according to the present invention;
- Figure 4 shows a block diagram of the apparatus in its essential elements according to the present invention.

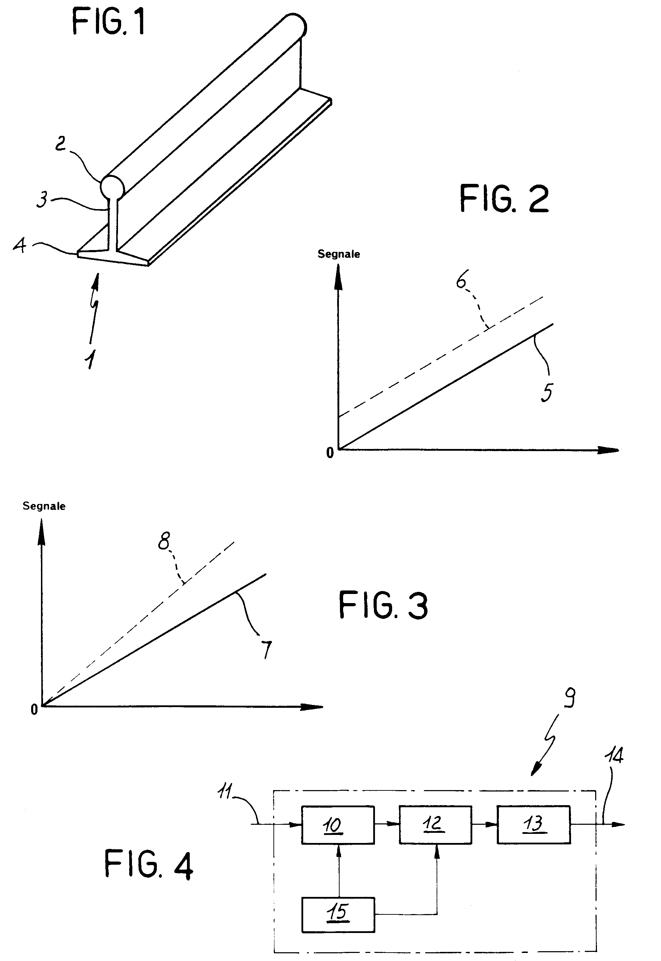

With reference to Figure 1, the designation 1 has been applied to a portion of rail wherein can be distinguished an upper part indicated as 2, and denominated head, an intermediate portion, denominated stem, indicated as 3, and a base portion, in the shape of an inverted T indicated as 4 and denominated flange.

The apparatus and the sensors are normally applied in the part pertaining to the portion 3 denominated stem, as well as on the flange 4.

In figure 2, a management of the measurement signal is represented on Cartesian axes, where thermal drifts are in the horizontal and signals are in the vertical. Starting from a zero origin, a line 5 indicates the ordinary response curve whilst after perturbing phenomena a translation occurs, represented by a dashed line indicated as 6. In Figure 3, an additional profile of the signal has been shown as a function of the thermal drifts referred starting from an origin 0, where a normal profile is indicated with a full line 7, and a profile induced by the so-called end of scale drift is indicated with a dashed line 8.

Lastly, in Figure 4 a measurement apparatus wherein the blocks as explained hereafter are shown has been indicated in its entirety as 9, and dashed internally.

A block 10 is a measurement strain gauge, which is a Wheatstone bridge, that receives measurement signals 11 coming from strain gauges applied along the rail. A processor 12 then processes said signals and applies compensation measurements through conditioning interfaces 13, which send related correction signals 14.

Any overvoltages are controlled by means of a related protection device 15, which may also comprise filters to prevent perturbations resulting from induced overvoltages.

From the procedural point of view, reference is made to a section of track of about 1500 mm, whereon are applied, according to the method specified hereafter, strain gauges in certain positions suitable for detecting deformations on the rail itself and simultaneously the temperature is measured according to a sequential method. From the point of view of the correction signals, it should be noted that the rail is encaged in a containment structure with rigid constraints and it is subjected to heating and to cooling, in order to detect the values of the longitudinal loads generated as a result of these external heat-induced phenomena.

The method according to the present invention provides for the application of two strain gauges, according to block 10, applied longitudinally to the stem 3 of the rail and two compensation strain gauges 10 applied onto a plate of the same material as the rail placed in contact, without rigid constraints, thereon. In this way it is possible to compensate for heat-induced effects of the material of the strain gagues without the compensation strain gauges 10 being subjected to mechanical deformations. Now, if the assumed constraints of the rail are to be deemed canonical, then the related reference longitudinal sliding shall be represented exclusively by the thermal drift of the strain gauge 10 itself which shall be in proportion to the opening and therefore shall behave as expected. At this point a temperature T can be measured which determines a known value of apparent deformation. Any longitudinal sliding or loads shall be easily recognised and do not alter the measurement.

The second step in the method entails the application of two active strain gauges 10 transversely to the rail and on the stem 3, together with two additional compensation strain gauges applied onto a plate of the same material as the rail and placed in contact, without rigid constraints, thereon. Note that in this case as well this artifice allows to compensate for the thermal traction effects of the material of the strain gauges without the latter being subjected to mechanical stresses. In this case as well, if sliding is nil, then the measurement is represented esclusively by the transverse expansion of the rail itself, due both to the thermal action and to the application of the external phenomena. At this point, at a certain temperature T, the measured value must be equal to a known theoretical value, proportional to the longitudinal load acting on the rail. This measurement allows to represent, as in Figure 2, the line 5 which is the profile of the measured signal as a function of the load applied.

The subsequent step in the method is the application of two active strain gauges 10 transversely to the rail, but on flange 4, and two compensation strain gauges applied onto a plate of the same material as the rails and placed in contact without rigid constraints thereon.

In this case too this artifice allows to compensate for all thermal traction effects. This additional measurement must confirm the previous one in the step shown. If there is no confirmation and thus there is a drift, for instance, represented by the line 6 in Figure 2, then compensations must be put in effect to restore the deformation values to the foreseen ones. As a result of the perturbating phenomena, the response curve of the system i.e. the measurement, tends to shift from the line 5 to the line 6 and therefore it is necessary, by means of the circuits of the apparatus 9, to bring the starting value back to the initial zero position, subjecting the measuring unit 9 to thermal cycles at various temperaturs until the value is brought back to the zero point, which is the condition that is stored.

From Figure 3, it is possible to note that the end of scale drift also undergoes a variation, since the gain of the amplifier, present in the apparatus 9 and comprised in the block 13 (but not directly shown), is influenced by temperature variations and thus makes the response. curve translate from the response line 7 to profile 8. In this case a series of thermal cycles must again be applied to bring back the profile according to the line 7 shown in Figure 3.

It should be noted that the entire set of electronics of the apparatus 9 is positioned in contact with the rails and is protected towards the outside by insulating resins in order to ensure that the measured temperature is very close to the actual temperature of the rail.

Moreover, the block diagram in Figure 4 also allows for a representation not of the digital, but of the analogue type, where instead of processor 12 an analogue-digital converter is provided to convert analogue processing into digital signals which then must put in effect the compensation, i.e. correction, procedures and actions on the rail itself.

The signals can be acquired by means of a portable unit, for example a PC, through a connector not shown in Figure 4, but present on the apparatus itself.

It should also be noted that the measurement is identified by an identification code in order to catalogue all rails 1 subjected to such measurement.

Previously the reference values indicated in Figures 2 and 3, respectively with the continuous lines 5 and 7, are those obtained in the laboratory before installation by heating and cooling the encaged rail section taken as a baseline measurement.

In summary the method comprises a first measurement through the direct or indirect application of one or more strain gauges onto the part related to the stem in the longitudinal sense, subsequently, in addition or alternatively to the previous measurement, a second measurement with the application of strain gauges applied transversely and then a third measurement with strain gauges applied transversely, however not on the stem but on the flange of the rail itself.

This series of artifices with the related compensation strain gauges represented by Wheatstone bridges, known in the prior art, allow to determine univocally and objectively the measures of dilation then deformation of the rail itself both longitudinally and transversely.

The measurement is performed by means of the electronic circuitry in Figure 4, which can comprise the processor 12 or an analogue part and then an analogue-digital converter for processing the measurement signals.

The invention thus attains the proposed purposes. From this method and from the related apparatus it is possible to measure all the longitudinal and transverse deformations of rails along the railway line and to put in effect compensations when the measurements deviate by a certain tolerance from the values forecast on the basis of the so-called reference measurements performed on the rails themselves before installation.

Conveniently, the invention can have important uses in the search for and experimental determination of the limit (or critical) load of the various types of tracks and in the study of the train-track-structure interaction, with the resulting positive consequences on the correct dimensioning of artifacts and in particular of bridges and viaducts and of the related foundation works. All uncertainties existing today with regard to the need to install expansion joints on the track in proximity to or in correspondence with bridges and viaducts would be resolved.

Lastly, exploiting the ability of the aforesaid invention to detect the flexural variations of the stress due to the transit of the individual axle, the invention itself can be used as an axle-counter for each instrumented section, with the additional capability of identifying at all times the position of the train along the line with an approximation equal to the space interval of the track sections instrumented with the apparatus constituting the object of the present invention. With a very high measurement sensitivity, the invention is also able to determine the load bearing down on each individual wheel and any load imbalances between the wheels of the same axle.

Therefore the invention allows:
1) to measure the temperature and the stresses acting in the rail during the installation phase and to verify, during that phase, the correct "adjustment" of the track;
2) to measure axial and flexural stresses during operation, allowing constantly to verify the absence of hazardous situations;
3) to determine experimentally the critical load of the track for the various types of lay-out;
4) to verify experimentally the results of theoretical studies and calculations pertaining to the train-track-structure interaction;
5) to serve as an axle-counter;
6) to identify the position occupied by the train along the line;
7) to determine individual wheel loads and any load imbalances between the wheels of the same axle.

Obviously, additional variations in the parameters and circuits of the invention are possible without thereby departing from the scope of the invention, also varying the software of the processor for additional types of measurement.

## Claims

1. Method for determining the load on rails and related apparatus of the type comprising measurement means connected through circuitry with processing and actuating means, said method being characterised in that, through said processing means connected with rails, the following measurement phases are carried out:
a - application of one or more measuring strain gauge bridges longitudinally onto a stem of a rail in combination with two bridges to compensate for and measure any longitudinal sliding with respect to the measurement zero of the rail;
b - application, in addition or as an alternative to the previous item, of one or more strain gauge bridges transversely onto the stem of the rails in combination with two compensation and related measurement bridges;
c - application of two measuring strain gauge bridges transversely to the rail onto its flange and related measurement;
d - correcting actions through the actuating means if there is a deviation from a theoretical value known on the basis of the measurements performed previously on sample rails encaged with rigid constraints before installation.

2. Method according to claim 1 characterised in that the compensating strain gauges are applied onto plates of the same material as the rail and put in contact thereon without rigid constraints.

3. Method according to claim 2 characterised in that for each phase of the measurement the measured value must be equal to a known theoretical value proportional to the longitudinal load acting on the rail during that phase.

4. Method according to claim 3 characterised in that the value measured at a certain temperature must be equal to a known theoretical value proportional to the transverse load acting on the rail during that phase.

5. Method according to claim 4 characterised in that the measurement as per item b) above must be confirmed by the measurement as per item c) of the method itself

6. Apparatus for determining the load on a rail characterised in that said measurement means are active Wheatstone bridge strain gauges connected with processors and connected to actuating means known in the prior art to accomplish any required compensation.

7. Apparatus for determining the load on a rail characterised in that said measurement means are active Wheatstone bridge strain gauges with analogue devices associated to analogue-digital converters.

8. Apparatus according to claim 6, characterised in that protection circuits are provided to filter out overvoltages induces on the rail itself.
